# EUROPÄISCHE PATENTSCHRIFT

(11) **EP 3 869 275 B1**
(45) Veröffentlichungstag und Bekanntmachung des Hinweises auf die Patenterteilung: **03.08.2022**
(21) Anmeldenummer: 21155915.8
(22) Anmeldetag: 09.02.2021
(51) Int. Cl.: G03H 1/02, G03H 1/20, G03H 1/00, G03H 1/04, B32B 38/18, B32B 37/00

(54) **BELICHTUNGSTISCH FÜR EINE HOLOGRAMMBELICHTUNGSMASCHINE**
EXPOSURE TABLE FOR HOLOGRAM EXPOSURE MACHINE
TABLE D'EXPOSITION POUR UNE MACHINE D'EXPOSITION HOLOGRAMME

(30) Priorität: 12.02.2020 DE 102020103614
(43) Veröffentlichungstag der Anmeldung: 25.08.2021
(73) Patentinhaber: Bundesdruckerei GmbH, 10969 Berlin (DE)
(72) Erfinder: Langgaßner, Michael, 81245 München (DE); Richter, Werner, 80999 München (DE)
(74) Vertreter: Hentrich Patent- & Rechtsanwälte PartG mbB

(56) Entgegenhaltungen:
- EP-A1- 2 556 412
- DE-A1-102013 200 980
- US-A1- 2007 024 939
- US-B2- 6 449 067

## Beschreibung

Die Erfindung betrifft einen Belichtungstisch für eine Hologrammbelichtungsmaschine, mit einer Halteeinrichtung, in der eine Masteraufnahme ausgebildet oder vorhanden ist, die ausgestattet ist, einen Master aufzunehmen, und mit einer Filmführung, die ausgebildet ist, einen Hologrammfilm relativ bezüglich der Halteeinrichtung zu führen und einen zu belichtenden Filmabschnitt in einem Belichtungsbereich relativ bezüglich des Masters für eine Hologrammbelichtung zu positionieren.

Aus dem Stand der Technik ist es bekannt, Hologramme als Sicherheitselemente in Sicherheitsdokumente oder Wertdokumente zu integrieren. Sicherheitselemente sind solche Entitäten, welche mindestens ein Merkmal aufweisen, welches ein unautorisiertes Duplizieren, Nachahmen und/oder Verfälschen eines Gegenstands erschwert, in welchen das Sicherheitselement integriert ist. Hologramme werden als Sicherheitselemente beispielsweise in Reisepässen oder Personalausweisen verwendet. Sie werden jedoch auch in Banknoten, Führerscheinen, Visa, anderen Wertzeichen, Etiketten oder Tickets, Kreditkarten, Bankkarten, Telefonkarten oder Ähnlichem eingesetzt.

Eine besondere Gruppe von Hologrammen stellen Volumenhologramme dar. Bei einem Volumenhologramm ist eine beugende Struktur des Hologramms im Volumen des holografischen Aufzeichnungsmaterials gespeichert, wie beispielsweise den Druckschriften DE 10 2012 215 540 A1, DE 10 2007 042 385 A1 und DE 10 2007 042 386 A1 zu entnehmen ist. Als Aufzeichnungsmaterialien für Volumenhologramme werden in Wert- und/oder Sicherheitsdokumenten in der Regel holografische Belichtungsfilme eingesetzt, die zumeist auf Rollen bereitgestellt werden. Diese Belichtungsfilme sind geeignet, Interferenzstrukturen zu speichern, deren charakteristische Abmessungen im Bereich der Lichtwellenlänge des Lichts liegen, welches zur Aufzeichnung bzw. Rekonstruktion des Hologramms verwendet wird.

Bei einem Kontaktkopierverfahren wird der holografische Belichtungsfilm vor einem Master angeordnet, in dem beugende Strukturen ausgebildet sind, die in den holografischen Belichtungsfilm "übertragen" werden sollen. Die beugenden Strukturen des Masters werden beim Kontaktkopierverfahren somit in den holografischen Film kopiert. Hierfür wird kohärentes Licht durch den holografischen Film, der in unmittelbarer Nähe vor dem Master oder in Kontakt mit dem Master vor diesem angeordnet ist, auf den Master gestrahlt. Die beugenden Strukturen in dem Master beugen das Licht so, dass das gebeugte Licht in den holografischen Film zurückgestrahlt wird. Dort interferiert dieses mit dem kohärenten Licht, welches zur Beleuchtung des Masters genutzt wird. In dem holografischen Film bildet sich somit eine Interferenzstruktur aus, welche durch das an dem Master gebeugte Licht festgelegt ist. Wird der holografische Film entwickelt und rekonstruiert, so gleicht die Rekonstruktion der, die beim Beleuchten des Masters zu beobachten ist. In dem holografischen Film wird ein Hologramm gespeichert, welches auch als Denisjuk-Hologramm bezeichnet wird und ein Volumenreflexionshologramm ist. Es versteht sich, dass das eingestrahlte Licht eine geeignete Wellenlänge (oder geeignete Wellenlängen) und eine geeignete Einstrahlrichtung (oder geeignete Einstrahlrichtungen) aufweisen muss, so dass eine Beugung an der Beugungsstruktur in der gewünschten Weise erfolgt. Ein Verfahren zur Herstellung eines Masters und ein Kontaktkopierverfahren sind der EP 0 896 260 A2 zu entnehmen.

Die holografischen Merkmale auf dem Belichtungsfilm können nicht oder nur fehlerhaft im Filmmaterial "gespeichert" werden, wenn der Hologrammfilm während seiner Belichtung nicht vollständig plan, blasen- sowie knitterfrei gegenüber dem Master positioniert ist. Durch Blasen oder Knitterstellen können bei einer Belichtung des Films unerwünschte Reflexionen auftreten.

Zudem ist es zur Belichtung unterschiedlicher Hologramme erforderlich, dass auch unterschiedliche Master bereitgehalten werden, sodass häufig sehr lange Rüstzeiten für die Umrüstung einer Belichtungsmaschine erforderlich sind, um ein zweites Hologramm in den Hologrammfilm einzubelichten. Dies ist umso schwerer, wenn die Belichtungsmaschine dazu genutzt werden soll, Hologramme für unterschiedliche Kartenformate, wie beispielsweise ID-1-, ID-2- oder ID-3-Formate mit Hologrammen zu versehen.

Es ist daher die Aufgabe der vorliegenden Erfindung, einen Belichtungstisch anzugeben, der zumindest einem der vorstehend erwähnten Nachteilen Rechnung trägt.

Diese Aufgabe wird mit einem Belichtungstisch mit dem Merkmalsbestand des Anspruchs 1 gelöst. Vorteilhafte Ausgestaltungen mit zweckmäßigen Weiterbildungen der Erfindung sind in den abhängigen Ansprüchen angegeben.

Der Belichtungstisch weist dabei insbesondere die Halteeinrichtung auf, welche als eine Platte mit einer Mehrzahl an Masteraufnahmen gebildet ist, wobei die Orientierung der Platte bezüglich des Belichtungsbereichs derart veränderbar ist, dass selektiv der für die Hologrammbelichtung erforderliche Master mit seiner Masteraufnahme im Belichtungsbereich angeordnet ist. Damit ist der Vorteil verbunden, dass eine Mehrzahl an Mastern bei ein- und demselben Belichtungstisch durch die Halteeinrichtung bereitgestellt wird. Die als Platte geformte Halteeinrichtung bietet dabei eine einfache Möglichkeit, um unterschiedliche Volumenreflexionshologramme - auch unterschiedliche Formate derselben - in einen Filmabschnitt eines Hologrammfilms einzubringen, welcher sich in dem Belichtungsbereich befindet.

Ein vereinfachter Masterwechsel für eine Hologrammbelichtung ist von Vorteil. Aus diesem Grunde ist die Möglichkeit eröffnet, dass der Platte eine Drehlagerung zugeordnet ist, und dass die Platte um eine senkrecht zur Plattenoberfläche orientierte Achse drehbar gelagert ist. Typischerweise ist die Achse dabei parallel zur optischen Achse der Hologrammbelichtung ausgerichtet.

Es ist zu gewährleisten, dass die Orientierung des in den Hologrammfilm eingebrachten Volumenhologramms stets dieselbe ist, sodass sich auch dadurch die Breite des Hologrammfilms minimal halten lässt und damit Material und Kosten eingespart werden können. In diesem Zusammenhang ist es daher von Vorteil, wenn bei dem Belichtungstisch, insbesondere bei der Platte, eine Einrichtung zur Festlegung der Plattendrehlage vorhanden ist, die einem Plattenrand der Platte zugeordnet ist, welcher eine die Masteraufnahmen aufweisende Oberseite der Platte mit einer eine Drehlagerung aufweisenden Unterseite der Platte verbindet. Durch diese Einrichtung zur Festlegung der Plattendrehlage lassen sich selektiv die gewünschten Master im Belichtungsbereich positionieren, um die dem jeweiligen Master zugeordneten Strukturen in den Hologrammfilm zu kopieren.

Es ist von Vorteil, wenn die Einrichtung zur Festlegung der Plattendrehlage durch eine zur Anzahl der Masteraufnahmen korrespondierende Anzahl an Rastsitzen sowie durch mindestens ein Rastglied gebildet ist, und wenn das Rastglied verstellbar ist zwischen einer aus den Rastsitzen ausgerückten, die Drehung der Platte ermöglichenden Stellung und einer in einen der Rastsitze eingerückten, die Drehung der Platte unterbindenden Stellung. Durch das Verstellen des Rastgliedes ist also die Drehbewegung der Platte ermöglicht, sodass auf schnelle und positionsgenaue Weise, ein Masterwechsel vorgenommen werden kann. Die Verstellung des Rastgliedes kann entweder manuell, pneumatisch oder auch elektromotorisch erfolgen. Auch die Drehung der Platte kann manuell, pneumatisch oder elektromotorisch erfolgen.

Der Belichtungstisch für eine Hologrammbelichtungsmaschine umfasst vorzugsweise eine der als Platte gebildeten Halteeinrichtung zugeordnete Drucklufteinrichtung, die ausgebildet ist, den Filmabschnitt mittels eines Unterdrucks an dem in der Halteeinrichtung aufgenommenen, sich im Belichtungsbereich befindlichen Master zumindest zeitweise zu fixieren. Mit einem solchen Unterdruck ist gewährleistet, dass der Filmabschnitt plan und insbesondere frei von Gaseinschlüssen gegenüber dem Master fixiert wird, wodurch sich die Ausschussrate von belichteten Hologrammen deutlich reduzieren lässt. Zusätzlich wird der Filmabschnitt vollständig plan, blasen- und knitterfrei, insbesondere bewegungslos oder optisch stabil gegenüber dem sich im Belichtungsbereich befindenden Master positioniert, womit Volumenreflexionshologramme betriebssicher in den Hologrammfilm einkopiert werden können.

Der Master einer Hologrammbelichtungsmaschine ist typischerweise aus einem Material geformt, welches umfangseitig scharfe Kanten aufweisen kann. Diese Kanten können zu Kratzern am Hologrammfilm beim Transport desselben über dem Master und über der Halteeinrichtung führen. Um diesem Problem zu begegnen, ist die Drucklufteinrichtung vorzugsweise ausgebildet, zumindest zeitweise einen Überdruck derart bereitzustellen, dass der Transport des Hologrammfilms relativ bezüglich des Masters von einem Luftpolster gestützt erfolgt. In anderen Worten ist die Drucklufteinrichtung also ausgebildet, eine Blasluft bereitzustellen, die den Hologrammfilm auf seiner dem Master zugewandten Seite mit Druckluft beaufschlagt, sodass Beschädigungen des Filmes wirksam vermieden werden.

Zur sicheren Fixierung des Filmabschnittes an dem sich im Belichtungsbereich befindlichen Master während der Belichtung, hat es sich als vorteilhaft erwiesen, wenn die Drucklufteinrichtung aus einer Mehrzahl an Gasdurchtrittsanordnungen gebildet ist, wenn jeder Masteraufnahme oder dem entsprechenden darin aufgenommenen Master mindestens eine der Gasdurchtrittsanordnungen zugewiesen ist, und wenn die Drucklufteinrichtung mindestens einen Kanal umfasst, der ausschließlich mit der mindestens einen sich im Belichtungsbereich befindlichen Gasdurchtrittsanordnung strömungsmechanisch verbunden ist. In anderen Worten ist der Kanal also gegenüber den sich nicht im Belichtungsbereich befindlichen Masteraufnahmen und/oder den jeweiligen darin aufgenommenen Master abgedichtet. Die Platte mit ihren Gasdurchtrittsanordnungen und der Kanal der Drucklufteinrichtungen bilden dabei also eine Art Mehrwegventil aus, das derart ausgebildet ist, jeweils lediglich mit demjenigen Master oder derjenigen Masteraufnahme strömungsmechanisch verbunden zu sein, die sich im Belichtungsbereich befindet.

Eine zuverlässige Anlage des Filmabschnitts am Master ist dadurch geschaffen, dass die Gasdurchtrittsanordnung den Master umfangseitig rahmt, und dass die Gasdurchtrittsanordnung durch einen Schlitz oder durch eine mehrere Bohrungen umfassende Bohrungsanordnung (Bohrungsarray) gebildet ist.

Da ein Vakuum mit Druckluft häufig auf einfachere Weise zur Verfügung gestellt werden kann als ein mit einer als Vakuumpumpe erzeugtes Vakuum, hat es sich als vorteilhaft erwiesen, wenn die Drucklufteinrichtung eine pneumatische Venturisaugdüse zur Erzeugung des Unterdrucks umfasst. Somit kann mit dem so gebildeten Vakuumejektor auf einfache Weise komprimierte Druckluft in den Ejektor eingeleitet werden, die an einer mit einer Querschnittsverengung versehenen Treibdüse (Venturi-Düse) beschleunigt wird. Dabei steigt der dynamische Druck an und der statische Druck der Luft sinkt. Nach dem Passieren der Treibdüse entspannt sich die beschleunigte Luft und ein Vakuum entsteht, wobei zusätzlich Luft durch den mit der Gasdurchtrittsanordnung strömungsmechanisch verbundenen Vakuum-Anschluss in den Ejektor gesaugt wird, die zusammen mit der angesaugten Luft durch den Schalldämpfer aus dem Ejektor austritt. Damit ist eine einfache Variante der Drucklufteinrichtung geschaffen, um wahlweise - ggfs. in Abhängigkeit einer geeigneten Stellung von Ventilen - umfangseitig am Master einen Unterdruck oder einen Überdruck bereitzustellen.

Da der Hologrammfilm und auch der Vorgang des Hologrammbelichtens sehr empfindlich sind, ist es erforderlich, dass sowohl der Master als auch der Hologrammfilm möglichst staubfrei gehalten werden. Aus diesem Grund hat es sich als vorteilhaft erwiesen, wenn der Platte der Halteeinrichtung mit den Masteraufnahmen abseits des Belichtungsbereichs eine Masterreinigungseinrichtung mit einem Reinigungspad zugewiesen ist, welches derart gegenüber den in den Masteraufnahmen aufgenommenen Mastern angeordnet ist, dass beim Verdrehen der Platte oder des Drehtellers das Reinigungspad über den oder die Master streift. Damit wird also bei jedem Masterwechsel eine vorherige Reinigung des nachfolgend eingesetzten Masters durch die Masterreinigungseinrichtung vollzogen.

Da eine Flüssigreinigung von Vorteil ist, hat es sich als sinnvoll erwiesen, wenn die Masterreinigungseinrichtung eine strömungsmechanisch mit dem Reinigungspad verbundene Dosierpumpe zur dosierten Bereitstellung eines Reinigungsmittels umfasst. Mit der Dosierpumpe kann das Reinigungspad getränkt werden, wobei sich das Reinigungsmittel innerhalb des Reinigungspads gleichmäßig verteilt aufgrund der kapillaren Aktivität des Pads. Zugleich ist gewährleistet, dass das Reinigungspad nicht so stark mit Reinigungsmittel gesättigt wird, dass das Reinigungsmittel auf den Drehteller oder die Platte tropft.

Da die Flüssigreinigung oftmals eine gewisse Zeit in Anspruch nimmt, bis der gereinigte Master wieder trocken ist, hat sich der Einsatz einer Trocknungseinrichtung als vorteilhaft erwiesen. In diesem Zusammenhang ist es daher sinnvoll, wenn die Masterreinigungseinrichtung eine Einrichtung zur Bereitstellung einer Blasluft mit mindestens einer Düse umfasst.

Zusätzlich ist die Möglichkeit geschaffen, dass auch selektiv eine Reinigung vorgenommen oder eben nicht vorgenommen wird. Die Nichtvornahme der Reinigung kommt insbesondere in denjenigen Fällen in Betracht, in denen die Zeit zwischen den Masterwechseln sehr gering ist, sodass eine Verschmutzung des Masters unwahrscheinlich ist. Aus diesem Grunde kann es von Vorteil sein, dass die Masterreinigungseinrichtung eine Hubeinrichtung umfasst, die ausgebildet ist, das Reinigungspad zu verstellen zwischen einer abgesenkten Stellung, in welcher das Reinigungspad mindestens einen der Master kontaktiert, und einer angehobenen Stellung, in welcher das Reinigungspad berührungslos gegenüber allen Master gehalten ist

Um vor einer Belichtung des Hologramms zu gewährleisten, dass auch die etwaig vorhandenen letzten Gaseinschlüsse zwischen dem zu belichteten Filmabschnitt des Hologrammfilms und dem sich im Belichtungsbereich befindlichen Master beseitigt werden, hat es sich als vorteilhaft erwiesen, wenn eine Aufstreifeinrichtung vorhanden ist, um den zu belichteten Filmabschnitt auf den Master aufzustreifen.

Dabei ist die vorteilhafte Möglichkeit eröffnet, dass die Aufstreifeinrichtung einen zwischen zwei Anschlägen verschiebbaren Schlitten umfasst, an welchem eine auf einer Drehachse drehbar gelagerte und mit dem Filmabschnitt wechselwirkende Anpressrolle gelagert ist. Diese Anpressrolle kann also über den Filmabschnitt gerollt werden und trägt dabei etwaige Gaseinschlüsse zwischen dem Master und dem Hologrammfilm aus. Dabei ist außerdem die vorteilhafte Möglichkeit geschaffen, dass die Aufstreifeinrichtung alternierend, d.h. einerseits in einer Richtung filmaufwärts des Masters beginnend und andererseits filmabwärts des Masters beginnend, über den Filmabschnitt gerollt werden kann.

Um einen möglichst reibungslosen Transport des Hologrammfilms zu ermöglichen, ist es von Vorteil, wenn der Schlitten um eine senkrecht bezüglich der Drehachse der Anpressrolle orientierte Verfahrachse begrenzt verschwenkbar gelagert und damit die Anpressrolle zwischen einer angehobenen Stellung und einer abgesenkten Stellung verstellbar ist. In diesem Zusammenhang ist dabei die Möglichkeit vorhanden, dass insbesondere anschlagsnah oder am jeweiligen Anschlag jeweils eine Steuerkurve vorhanden ist, die ausgebildet ist, die Anpressrolle zwischen der angehobenen Stellung und der abgesenkten Stellung zu verstellen.

Zur Einstellung oder Variation der von der Anpressrolle ausgeübten Kraft auf den Filmabschnitt ist es sinnvoll, wenn dem Schlitten auf seiner dem Master abgewandten Seite eine Federanordnung zugeordnet ist, die den Anpressdruck der Anpressrolle auf den Master oder auf den sich am Master befindenden Filmabschnitt einstellt oder vorgibt. Die Andruckkraft der Anpressrolle wird dabei über das Moment der Federkraft um die Verfahrachse bestimmt.

Um Toleranzschwankungen ausgleichen zu können, um also in anderen Worten Ausgleichsbewegungen für die Anpressrolle bereitzustellen, ist es möglich, dass die Anpressrolle selbst an einem Haltearm drehbar gelagert ist, der mittels einer senkrecht zur Drehachse der Anpressrolle orientierten Schwenkachse derart am Schlitten fixiert ist, dass der Haltearm und damit die Anpressrolle begrenzt verschwenkbar gegenüber dem Schlitten gelagert sind.

Um zu gewährleisten, dass der Hologrammfilm beim Transport weder an der Halteeinrichtung noch an dem in der Halteeinrichtung aufgenommenen Master streift, hat es sich als sinnvoll erwiesen, wenn die Filmtransporteinrichtung eine erste Filmhubeinrichtung umfasst, die zwischen einer angehobenen, einer Transportkonfiguration entsprechenden Stellung und einer abgesenkten, einer Belichtungskonfiguration entsprechenden Stellung verstellbar ist. Mit dieser Ausgestaltung ist zusätzlich die Möglichkeit eröffnet, dass der Hologrammfilm vor oder bei seinem Fixieren derart gegenüber dem Master gehalten wird, dass die Oberfläche des zu belichtenden Filmabschnitts und die Oberfläche des Masters unter einem spitzen Winkel aufeinander zu oder voneinander weg verlaufend orientiert sind. Durch eine solche "Rampe" bzw. durch einen solchen fiktiven "Keil" lässt sich bei der anschließenden Fixierung mittels der Saugluft hinreichend gut Luftblasen austreiben oder etwaige andere Gaseinschlüsse vermeiden, da diese vom spitzen Winkel weggedrückt werden, insbesondere in denjenigen Fällen, in denen zusätzlich eine Aufstreifeinrichtung zur Fixierung des Filmabschnitts am Master genutzt wird. Um einen derartigen "Keil" sowohl in als auch entgegen der Filmtransportrichtung bereitstellen zu können, ist zudem die Möglichkeit gegeben, dass die Transporteinrichtung eine zweite Filmhubeinrichtung umfasst, die zwischen einer angehobenen, einer Transportkonfiguration entsprechenden Stellung und einer abgesenkten, einer Belichtungskonfiguration entsprechenden Stellung verstellbar ist.

Um den Transport des Hologrammfilms so reibungslos als möglich zu gestalten, ist es von Vorteil, wenn die erste Filmhubeinrichtung und/oder die zweite Filmhubeinrichtung eine um eine Achse drehbare Filmhubwalze umfasst. Mit der Filmhubwalze kann der Hologrammfilm angehoben oder abgesenkt werden.

Zur verbesserten Führung, insbesondere zum verbesserten Halten des Hologrammfilms, ist es von Vorteil, wenn die erste Filmhubeinrichtung und/oder die zweite Filmhubeinrichtung eine zur Filmhubwalze achsparallel angeordnete Führungswalze umfasst, die jeweils an einem begrenzt um die Achse verschwenkbaren Hebelarm drehbar gelagert ist.

Bei der Belichtung des Hologrammfilms ist es erforderlich und wünschenswert, dass der Hologrammfilm staubfrei ist. Aus diesem Grund ist es von Vorteil, wenn eine Reinigungseinrichtung vorhanden ist, die ausgebildet ist, den zu belichtenden Filmabschnitt des Hologrammfilms, insbesondere schon während dessen Transports, mit ionisierter Luft auf seiner dem Master zugewandten Seite zu besprühen. Dies dient auch der statischen Entladung des Films.

Diese ionisierte Luft kann ebenfalls zur Bereitstellung eines Luftpolsters während des Transports genutzt werden, wozu die Reinigungseinrichtung insbesondere eine zumindest teilweise, vorzugsweise aber überwiegend in einer Filmtransportrichtung orientierte erste Sprühdüse für ionisierte Luft umfasst und wobei die Reinigungseinrichtung eine zumindest teilweise, vorzugsweise überwiegend entgegen der Filmtransportrichtung orientierte zweite Sprühdüse für ionisierte Luft umfasst.

Für einen kompakten, symmetrischen Aufbau des Belichtungstisches ist es dabei vorteilhaft, wenn die erste Sprühdüse filmaufwärts bezüglich der Halteeinrichtung angeordnet ist, und wenn die zweite Sprühdüse filmabwärts bezüglich der Halteeinrichtung angeordnet ist.

Die vorliegende Erfindung wird nachfolgend anhand von Figuren näher erläutert, wobei die dargestellten Beispiele lediglich exemplarischen Charakter haben und keine Einschränkung hinsichtlich der Tragweite der beschriebenen Erfindung darstellen. Es zeigen im Einzelnen:
- Figur 1: eine schematische Darstellung einer Belichtungsmaschine zur Belichtung eines Volumenreflexionshologramms in einem Hologrammfilm,
- Figur 2: eine Draufsicht auf einen Belichtungstisch mit der Anpressrolle in rechter Endlage,
- Figur 3: eine weitere Draufsicht auf den Belichtungstisch mit der Anpressrolle in linker Endlage, wobei zusätzlich ein Teil der Reinigungseinrichtung gezeigt ist,
- Figur 4: den Schnitt entlang der Linie IV - IV aus Figur 3,
- Figur 5: eine weitere Draufsicht auf den Belichtungstisch mit seiner Masterreinigungseinrichtung, und
- Figur 6: den Schnitt entlang der Linie VI - VI aus Figur 5.

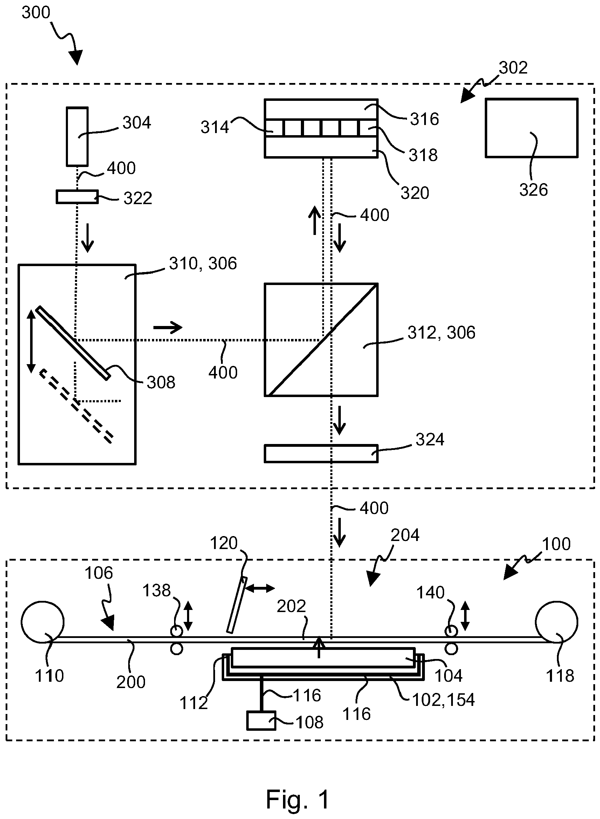

In Figur 1 ist schematisch eine Hologrammbelichtungsmaschine 300 zum Belichten von Hologrammen in einem Hologrammfilm 200 gezeigt. Eine solche Hologrammbelichtungsmaschine 300 wird auch als Holobelichter bezeichnet.

Die Hologrammbelichtungsmaschine 300 umfasst eine in der Zeichnung oben dargestellte Belichtungseinrichtung 302 und einen in der Zeichnung unten dargestellten Belichtungstisch 100.

Die Belichtung von Hologrammen erfolgt mittels kohärenten Lichts. Hierfür weist die Belichtungeinrichtung 302 eine Lichtquelle 304 auf, welche vorliegend als ein cw-Laser ausgebildet ist. Vorliegend steht "cw" für "continuous wave" und bedeutet "zeitlich konstant abgestrahlte Welle". Es ist die Möglichkeit gegeben, dass es sich bei der Lichtquelle 304 um einen gepulsten Laser handelt. Das Licht 400 der als Laser ausgebildeten Lichtquelle 304 weist einen ersten Polarisationszustand auf. Zum Führen des Lichts 400 wird eine Strahlführungsoptik 306 verwendet. Das Licht der Lichtquelle 304 wird bei der dargestellten Belichtungseinrichtung 302 zunächst, ggfs. unter Zuhilfenahme einer Strahlformungseinrichtung 322 zur insbesondere in einer Raumrichtung orientierten Strahlaufweitung, auf eine Ablenk- und Scanvorrichtung 310 der Strahlführungsoptik 306 geführt. Diese Ablenk- und Scanvorrichtung 310 umfasst einen Galvanometerscanner und einen mit dem Galvanometerscanner gekoppelten Spiegel 308, an dem das einfallende Licht 400 umgelenkt wird. In einer ersten Stellung ist der Spiegel 308 mittels einer durchgezogenen Linie dargestellt, wobei er in einer zweiten Stellung strichliert gezeigt ist. Durch das Verschieben des Spiegels 308 kann eine einem "Scan", insbesondere einem Linienscan entsprechende Belichtung des Hologramms erfolgen. In anderen Worten wird der Hologrammfilm 200 zur Belichtung des Hologramms "abgetastet". Anders geartete Ablenk- und Scanvorrichtungen 310 für das Licht 400 sind ebenfalls einsetzbar.

Das abgelenkte Licht 400 wird auf einen polarisationsabhängigen Strahlteilerwürfel 312 der Strahlführungsoptik 306 geführt. Dieser ist aus einem ersten Prisma und einem zweiten Prisma gebildet, an deren Grenzfläche eine polarisationsabhängige Strahlteilung erfolgt. Anstelle von Prismen kann auch eine Strahlteilerplatte Einsatz finden. Licht 400 des ersten Polarisationszustands wird an dieser Grenzfläche abgelenkt. Licht eines weiteren, zu dem ersten Polarisationszustand orthogonalen Polarisationszustands kann hingegen durch die Grenzfläche hindurchtreten.

Das an der Grenzfläche des polarisationsabhängigen Strahlteilerwürfels 312 abgelenkte Licht 400 wird auf einen räumlichen Lichtmodulator 314 gelenkt, der als sogenannter Liquid-Crystal-on-Silicon-Lichtmodulator (LCoS) ausgebildet ist. Der Lichtmodulator 314 umfasst eine Siliziumschicht 316, an der auftreffendes Licht 400 reflektiert wird. Auf dieser Siliziumschicht 316 sind vorliegend elektronische Schaltelemente ausgebildet, die zum Schalten von Flüssigkristallzellen 318 verwendet werden, die vor der zur Reflexion genutzten Oberfläche der Siliziumschicht 316 angeordnet sind. Die einzelnen Flüssigkristallzellen 318 können individuell in unterschiedliche Schaltzustände versetzt werden. Typischerweise liegt ein Array an Flüssigkristallzellen 318 vor, so dass aus der Papierebene heraus oder in diese hinein versetzt weitere Reihen an Flüssigkristallzellen 318 vorliegen. Abhängig von dem jeweiligen Schaltzustand der Flüssigkristallzellen 318 wird ein Polarisationszustand des durchtretenden Lichts 400 geändert oder nicht geändert, wodurch das Licht 400 räumlich moduliert wird. Vereinfachend wird hier angenommen, dass in einem ersten Schaltzustand das in einem ersten Polarisationszustand auf den Lichtmodulator 314 auftreffende Licht 400 beim Durchtritt durch eine Flüssigkristallzelle 318, welche aufgrund der Reflexion an der Oberfläche der Siliziumschicht 316 zweimal durchlaufen wird, insgesamt hinsichtlich der Polarisation so verändert wird, dass das Licht 400 anschließend in dem zu dem ersten Polarisationszustand orthogonalen weiteren Polarisationszustand polarisiert ist. Dieses hinsichtlich der Polarisation modulierte Licht 400 tritt durch eine transparente Schutzscheibe 320 des räumlichen Lichtmodulators 314, wobei insbesondere eine Austrittsfläche der Schutzscheibe 320 parallel zu der Reflexionsoberfläche der Siliziumschicht 316 orientiert ist. Die Oberflächennormale des Lichtmodulators 314 ist somit orthogonal sowohl zu der Austrittsfläche der Schutzscheibe 320 als auch zu der reflektierenden Oberfläche der Siliziumschicht 316.

Das modulierte Licht trifft nach dem Austreten aus dem Lichtmodulator 314 erneut auf dem polarisationsabhängigen Strahlteiler 312 auf, wobei das vom LCoS zurückreflektierte modulierte Licht 400 abhängig von seinem Polarisationszustand die Grenzfläche des Strahlteilers 312 passieren kann oder nicht. Ist das modulierte Licht 400, wie im exemplarisch dargestellten Fall, aufgrund des ersten Schaltzustands der Flüssigkristallzelle in den zu dem ersten Polarisationszustand orthogonalen weiteren Polarisationszustand überführt worden, so kann dieses die Grenzfläche des polarisationsabhängigen Strahlteilerwürfels 312 passieren, womit es, ggfs. unter Zuhilfenahme eines Polarisationsfilters 324, weiter in Richtung des Belichtungstisches 100, insbesondere in einen Belichtungsbereich 204 geleitet wird. Anteile des Lichts 400, die sich nach wie vor in dem ersten Polarisationszustand befinden und an dem polarisationsabhängigen Strahlteilerwürfel 312 ankommen, werden an dessen Grenzfläche abgelenkt und gelangen daher nicht weiter in Richtung des sich unter der Belichtungseinrichtung 302 befindlichen Belichtungstisches 100. Durch den polarisationsabhängigen Strahlteilerwürfel 312 wird somit das Licht 400 abhängig von dem aufmodulierten Polarisationszustand räumlich hinsichtlich der Intensität moduliert.

Bei der Beschreibung der Belichtungseinrichtung 302 wurde bis hierher davon ausgegangen, dass der räumliche Lichtmodulator 314 den Polarisationszustand des Lichts um 90 Grad dreht oder unverändert lässt. Es sind jedoch auch Änderungen möglich, die eine Drehung der Polarisationsrichtung zwischen 0 Grad und 90 Grad bewirken. Alle diese Drehungen führen dazu, dass das Licht eine veränderte Amplitude und damit veränderte Intensität des weiteren Polarisationszustands aufweist. Je nach Drehwinkel variieren diese und nehmen mit dem Betrag der Drehung zwischen 0 Grad und 90 Grad zu. Hierdurch ist es möglich "Graustufen" zu belichten.

Der Belichtungstisch 100 weist eine Halteeinrichtung 102 auf, in welcher ein Master 104 aufgenommen ist. Der Master 104 umfasst einen Träger, welcher in der Regel aus Glas oder einem anderen Werkstoff gebildet ist. Auch andere Trägermaterialien sind möglich, beispielsweise Metalle. Auf den Träger ist vorzugsweise mindestens eine optisch aktive Schicht, beispielsweise eine Beugungsschicht, aufgebracht, welche eine zu kopierende Beugungsstruktur umfasst. Vorliegend umfasst die Beugungsschicht des Masters 104 ein Volumenreflexionshologramm, welches kopiert werden soll.

Es ist zu erkennen, dass die Belichtungsmaschine 300, insbesondere der Belichtungstisch 100 eine Filmtransporteinrichtung 106 umfasst, die ausgebildet ist, den Hologrammfilm 200 relativ bezüglich der Halteeinrichtung 102 und damit relativ zu dem sich im Belichtungsbereich 204 befindlichen Master 104 zu transportieren. Eine Filmführung bildet dabei einen Teil der Filmtransporteinrichtung 106. Die Filmtransporteinrichtung 106 ist also für ein Aufnehmen des holografischen Films und Halten und/oder Führen des Films während der Belichtung des Hologramms vorgesehen. Bei der dargestellten Belichtungsmaschine 300 umfasst die Filmtransporteinrichtung 106 eine Filmrolle 110, auf der der Hologrammfilm 200 bereitgestellt wird. Dieser wird nach dem Belichten auf einer weiteren Filmrolle 118 aufgewickelt. Gegebenenfalls durchläuft der belichtete Hologrammfilm 200 eine Strecke zur Entwicklung des Hologramms, durch welche thermisch auf den Hologrammfilm 200 eingewirkt wird, um das Hologramm im Film zu fixieren, bevor der belichtete Hologrammfilm 200 auf der weiteren Filmrolle 118 wieder aufgewickelt wird. Der Hologrammfilm 200 wird jedenfalls in typischer Weise mittels Filmführungsrollen geführt. Es ist zu erkennen, dass sich der Hologrammfilm 200 über den Bereich des Masters 104 hinweg erstreckt, womit die Filmtransporteinrichtung 106 in anderen Worten also ausgebildet ist, einen zu belichtenden Filmabschnitt 202 relativ bezüglich des Masters 104 zu positionieren. In diesen Filmabschnitt 202 wird das Volumenreflexionshologramm belichtet, mithin einkopiert. Um eine betriebssichere Belichtung des Hologramms zu erzielen, liegt der Hologrammfilm 200 während des Belichtungsvorgangs an dem Master 104 an. Durch diese Anlage lassen sich Eigenbewegungen des holografischen Films unterdrücken, was die erzielbare Beugungseffizienz des hergestellten Hologramms steigert.

Bei der Belichtung tritt das modulierte Licht 400, welches den weiteren Polarisationszustand aufweist, durch den zu belichtenden Filmabschnitt 202 des Hologrammfilms 200 hindurch und wird an der optisch aktiven Struktur der mindestens einen optisch aktiven Schicht des Masters 104 zurückgelenkt, z.B. bei einer als Beugungsschicht ausgebildeten optisch aktiven Schicht gebeugt. Das zurückgestrahlte Licht (nicht dargestellt) interferiert dann in dem Hologrammfilm 200 mit dem von dem Lichtmodulator 314 kommenden modulierten Licht 400. Hierdurch wird die optisch aktive Struktur, z.B. die beugende Struktur, des Masters 104 in den Hologrammfilm 200 einbelichtet. Hierbei wird die optisch aktive Struktur pixelweise abhängig von der räumlichen Modulation entweder belichtet und kopiert oder andererseits nicht belichtet und somit auch nicht kopiert. Es entsteht somit eine Kopie der optisch aktiven Struktur, beispielsweise eine Kopie eines Volumenreflexionshologramms einer Mattscheibe.

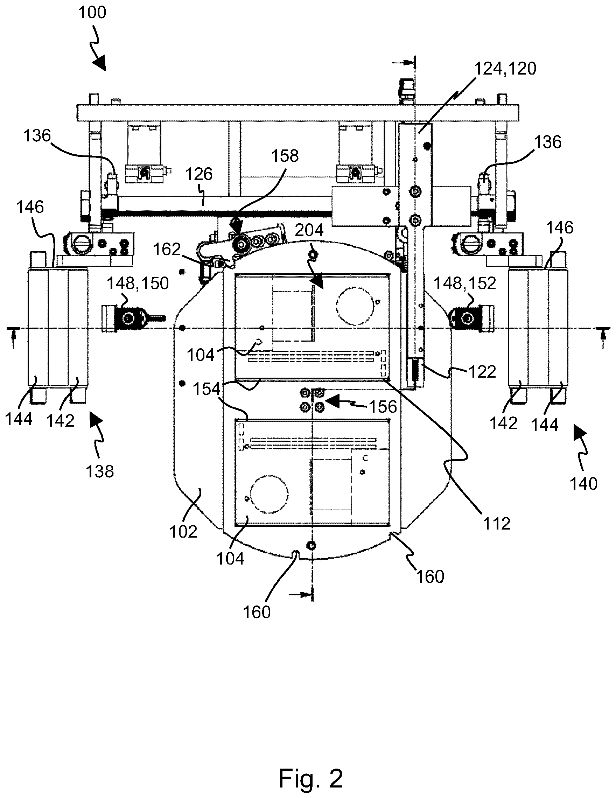

Die vorliegende Erfindung betrifft die Gestaltung und die Betriebsweise des Belichtungstisches 100, der in Figur 2 in einer Draufsicht näher zu erkennen ist. Die hierbei gezeigte Halteeinrichtung 102 ist mit einer Platte nach Art eines Drehtellers gestaltet und weist zwei Aufnahmen für einen Master 104 auf. Eine andere Anzahl an Masteraufnahmen 154 ist möglich, sodass auch drei oder mehr Master 104 auf ein- und derselben Halteeinrichtung 102 angeordnet werden können. Um die sehr empfindlichen Kanten des Masters 104 zu schützen, ist die Aufnahme der Halteeinrichtung 102 derart ausgestaltet, dass der jeweilige Master 104 gegenüber der Halteeinrichtung 102 bzw. deren Masteraufnahme 154 versenkt angeordnet ist oder mit letzteren höchstens in einer gemeinsamen Ebene liegt.

Der Drehteller, mithin die Halteeinrichtung 102, ist als eine Platte mit einer Mehrzahl der Masteraufnahmen 154 gebildet ist, wobei sich die Orientierung der Platte bezüglich des Belichtungsbereichs 204 derart verändern lässt, dass selektiv der für die Hologrammbelichtung erforderliche Master 104 mit seiner Masteraufnahme 154im Belichtungsbereich 204 angeordnet ist. Die Platte weist eine Drehlagerung 156 auf, wobei die Platte um eine senkrecht zur Plattenoberfläche orientierte Achse drehbar gelagert ist. Diese Achse ist vorliegend parallel zur optischen Achse der Hologrammbelichtung ausgerichtet.

Bei dem gezeigten Belichtungstisch 100 ist außerdem eine Einrichtung 158 zur Festlegung der Plattendrehlage vorhanden, die einem Plattenrand der Platte zugeordnet ist, welcher eine die Masteraufnahmen 154 aufweisende Oberseite der Platte mit einer eine Drehlagerung 156 aufweisenden Unterseite der Platte verbindet. Diese Einrichtung 158 zur Festlegung der Plattendrehlage ist durch eine zur Anzahl der Masteraufnahmen 154 korrespondierende Anzahl an Rastsitzen 160 sowie durch mindestens ein Rastglied 162 gebildet, wobei das Rastglied 162 verstellbar ist zwischen einer aus den Rastsitzen 160 ausgerückten, die Drehung der Platte ermöglichenden Stellung und einer in einen der Rastsitze 160 eingerückten, die Drehung der Platte unterbindenden Stellung. Die Verstellung des Rastglieds 162 erfolgt beispielsweise druckmittelbetätigt, insbesondere pneumatisch. Eine motorische, insbesondere eine elektromotorische Verstellung ist ebenfalls möglich.

Die Filmtransporteinrichtung 106 umfasst eine filmaufwärts des Masters 104 gelegene erste Filmhubeinrichtung 138 und eine filmabwärts des Masters 104 gelegene zweite Filmhubeinrichtung 140, die jeweils eine Filmhubwalze 142 und eine Führungswalze 144 bestehen. Die Filmhubwalze 142 ist achsparallel zur Führungswalze 144 angeordnet. Die Führungswalze 144 kann selbst an einem begrenzt um die Achse der Filmhubwalze 142 verschwenkbaren Hebelarm 146 drehbar gelagert sein (nicht näher gezeigt). Hierzu weist dann die betreffende Filmhubeinrichtung 138, 140 entsprechend bogenförmige Langlöcher auf (nicht näher gezeigt). Die Verstellung des Hebelarms 146 kann dabei druckmittelbetätigt, insbesondere pneumatisch erfolgen. Auch das Heben und Senken der Filmhubeinrichtungen 138, 140 erfolgt druckmittelbetätigt, insbesondere pneumatisch. Die Filmhubeinrichtungen 138, 140 der Filmtransporteinrichtung 106 gewährleisten während des Transports einen minimalen Abstand zwischen der Halteeinrichtung 102 und dem Hologrammfilm 200, sodass dieser keine Beschädigungen erfährt. Dieser Abstand kann beispielsweise zwischen 0,4 Millimeter und 1,1 Millimeter betragen, wodurch der Belichtungstisch 100 und damit die mit diesem gebildete Belichtungsmaschine 300 sehr platzsparend und kompakt gestaltet sind.

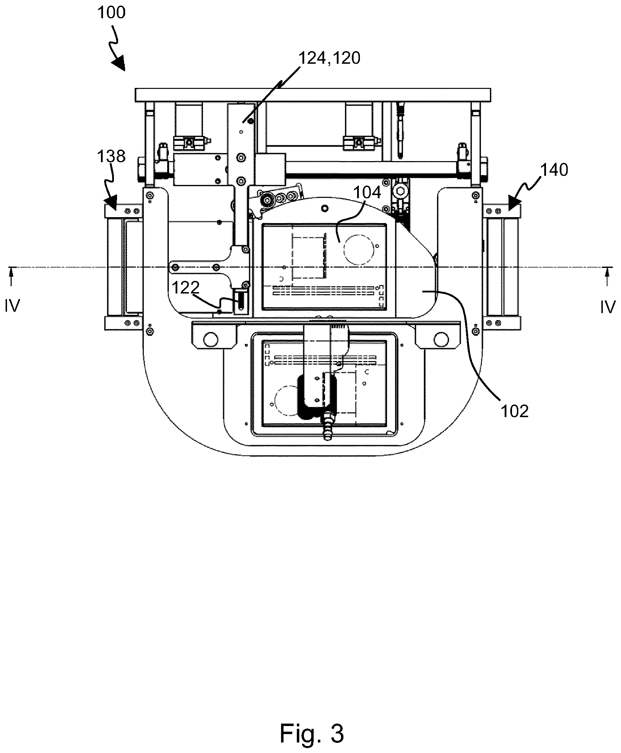

Um Gaseinschlüsse zwischen dem Hologrammfilm 200 und dem Master 104 herausdrücken zu können, ist vorliegend außerdem eine Aufstreifeinrichtung 120 vorhanden um den zu belichtenden Filmabschnitt 202 auf den Master 104 aufzustreifen. Diese Aufstreifeinrichtung 120 ist vorliegend durch einen zwischen zwei Anschlägen 136 verschiebbaren Schlitten 124 gebildet, an dem eine auf einer Drehachse drehbar gelagerte und beim Aufstreifen mit dem Filmabschnitt 202 wechselwirkende Anpressrolle 122 gelagert ist. Dieser Schlitten 124 ist in der Darstellung nach Figur 2 in seiner rechten Endlage gezeigt. Figur 3 zeigt den Schlitten 124 in seiner linken Endlage.

Der Schlitten 124 selbst ist vorliegend um eine senkrecht bezüglich der Drehachse der Anpressrolle 122 orientierte Verfahrachse 126 begrenzt verschwenkbar gelagert, wodurch sich die Anpressrolle 122 selbst zwischen einer angehobenen Stellung und einer abgesenkten Stellung verstellen lässt. An den Anschlägen 136 oder anschlagsnah ist jeweils eine Steuerkurve 128 vorhanden, die ausgebildet ist, die Anpressrolle 122 zwischen der angehobenen Stellung und der abgesenkten Stellung zu verstellen, wenn der Schlitten 124 mit dem Steuerkurven 128 wechselwirkt.

Die Drehachse der als Drehteller gebildeten Halteeinrichtung 102 ist dabei senkrecht zur Verfahrachse 126 des Schlittens 124 und im Wesentlichen senkrecht zur Drehachse der Anpressrolle 122 orientiert oder ausgerichtet.

Dem Schlitten 124 ist auf seiner dem Master 104 abgewandten Seite eine Federanordnung zugeordnet, die den Anpressdruck der Anpressrolle 122 auf den Master 104 oder auf den sich am Master 104 befindenden Filmabschnitt 202 einstellt oder vorgibt. Diese Federanordnung übt eine Federkraft auf den um die Verfahrachse 126 verschwenkbaren Schlitten 124 aus, sodass die Anpresskraft der Anpressrolle 122 im Bereich zwischen den beiden Anschlägen 136 maximal ist. Durch die Anschläge 136 und/oder die Steuerkurven 128 wird die Federanordnung 130 aber zumindest teilweise, vorzugsweise gänzlich, außer Kraft gesetzt, womit die Anpressrolle 122 vom Hologrammfilm 200 abgehoben werden kann, wenn sich der Schlitten 124 in seinen Endlagen befindet. Der Schlitten 124 wird vorliegend zwischen den beiden Anschlägen 136 ebenfalls druckmittelbetätigt, insbesondere pneumatisch verstellt. Eine hydraulische oder motorische Verstellung ist ebenfalls möglich.

Dem Schlitten 124 ist außerdem ein Haltearm zugeordnet, an welchem die Anpressrolle 122 drehbar gelagert ist. Dieser Haltearm weist eine senkrecht zur Drehachse der Anpressrolle 122 orientierte Schwenkachse auf, sodass der Haltearm derart an dem Schlitten fixiert ist, dass der Haltearm und damit die Anpressrolle 122 begrenzt verschwenkbar gegenüber dem Schlitten 124 gelagert sind, um dadurch eine Ausgleichsbewegung ausführen zu können, die durch Toleranzschwankungen oder durch etwaige Unebenheiten erzeugt werden.

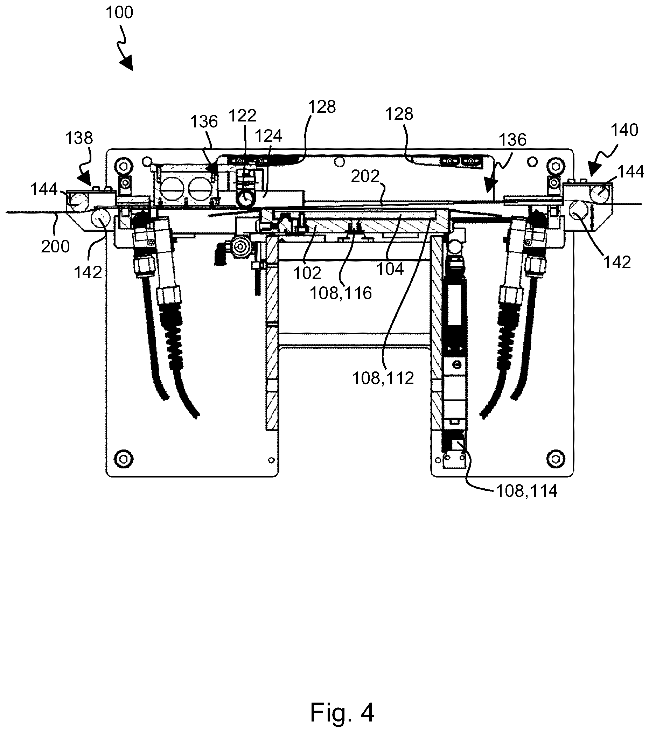

Ausweislich Figur 4 ist der Halteeinrichtung 102 vorliegend eine Drucklufteinrichtung 108 zugeordnet, die ausgebildet ist, für die Belichtung des Filmabschnitts 202 diesen mittels eines Unterdrucks an dem in der Halteeinrichtung 102 aufgenommenen Master 104 zumindest zeitweise zu fixieren. Bei jedem Master 104 in den Masteraufnahmen 154 ist vorliegend ein um den betreffenden Master 104 umfangsseitig angeordneter Schlitz vorhanden, der somit eine Gasdurchtrittsanordnung 112 bildet. Die Gasdurchtrittsanordnung 112 rahmt also den betreffenden Master 104 umfangsseitig und gewährleistet damit ein blasenfreies Anliegen des zu belichtenden Filmabschnitts 202 am Master 104. Vorliegend kann die Drucklufteinrichtung 108 aber zusätzlich dazu genutzt werden, um zeitweise einen Überdruck derart bereitzustellen, dass der Transport des Hologrammfilms 200 relativ bezüglich des Masters 104 im Belichtungsbereich 204 von einem Luftpolster gestützt erfolgt, was Beschädigungen des Hologrammfilms 200 zusätzlich vorbeugt. Die Drucklufteinrichtung 108 umfasst vorliegend mindestens einen Kanal 116, der ausschließlich mit der mindestens einen sich im Belichtungsbereich 204 befindlichen Gasdurchtrittsanordnung 112 strömungsmechanisch verbunden ist. Die Gasdurchtrittsanordnungen 112 der sich nicht im Belichtungsbereich 204 befindenden Masteraufnahmen 154 sind dabei gegenüber dem Kanal 116 der Drucklufteinrichtung 108 abgedichtet und lassen sich nur dann strömungsmechanisch mit dieser verbinden, wenn die betreffende Masteraufnahme 154 durch Verdrehen der als Platte gebildeten Halteeinrichtung 102 in den Belichtungsbereich 204 verbracht wird. In den Figuren ist zu erkennen, dass zur Erzeugung des erforderlichen Unterdrucks oder Vakuums die Drucklufteinrichtung 108 vorliegend eine pneumatische Venturisaugdüse 114 umfasst, die mit der betreffenden Gasdurchtrittsanordnung 112 über den einen oder die mehreren Kanäle 116 strömungsmechanisch verbunden und ggfs. in geeigneter Weise mit Ventilen verschaltet ist.

Um den Hologrammfilm 200 vor dem Belichten möglichst staubfrei zu halten und diesen damit vor Kratzern zu schützen, ist vorliegend eine Reinigungseinrichtung 148 vorhanden. Diese Reinigungseinrichtung 148 dient auch der statischen Entladung des Hologrammfilms 200. Die Reinigungseinrichtung 148 umfasst vorliegend eine in der Filmtransportrichtung orientierte und filmaufwärts des Masters 104 angeordnete erste Sprühdüse 150 für ionisierte Luft sowie eine entgegen der Filmtransportrichtung orientierte filmabwärts des Masters 104 angeordnete zweite Sprühdüse 152 für ionisierte Luft. Mit dieser ionisierten Luft kann zusätzlich zur Reinigungsfunktion das Luftpolster während des Transports zwischen dem Hologrammfilm 200 und der Halteeinrichtung 102 aufrechterhalten oder unterstützt werden, sodass der Reinigungseinrichtung 148 eine Doppelfunktion zukommt. Auf der dem Master 104 abgewandte Oberseite des Hologrammfilms 200 wirkt zusätzlich eine dritte Sprühdüse 130 der Reinigungseinrichtung 148 ein.

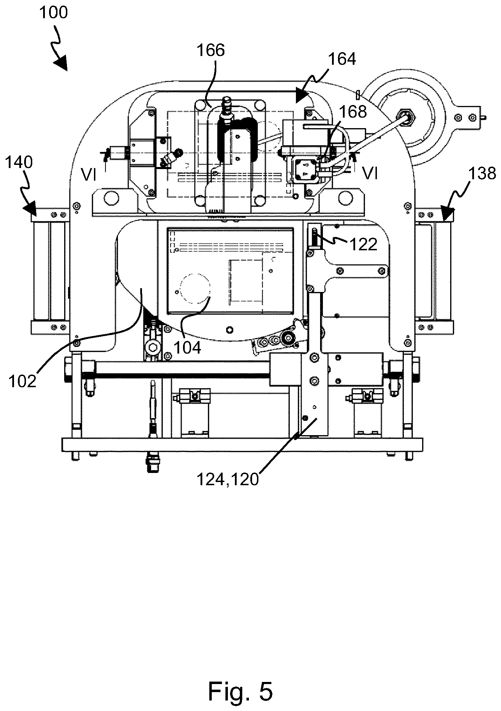

In Figur 5 ist zu sehen, dass die Platte des Belichtungstisches 100 abseits des Belichtungsbereichs 204 eine Masterreinigungseinrichtung 164 mit einem Reinigungspad 166 umfasst. Das Reinigungspad 166 ist derart gegenüber den in den Masteraufnahmen 154 aufgenommenen Mastern 104 angeordnet ist, dass - in einer geeigneten Konfiguration des Pads - beim Verdrehen der Platte oder des Drehtellers das Reinigungspad 166 über den oder die Master 104 streift.

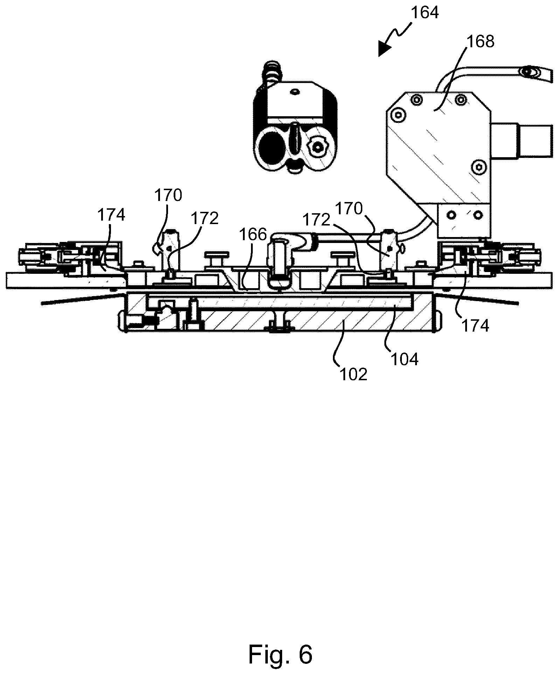

In Figur 6 ist die Masterreinigungseinrichtung 164 detaillierter gezeigt, wobei eine strömungsmechanisch mit dem Reinigungspad 166 verbundene Dosierpumpe 168 zur dosierten Bereitstellung eines Reinigungsmittels zu erkennen ist. Außerdem umfasst die Masterreinigungseinrichtung 164 eine Einrichtung 170 zur Bereitstellung einer Blasluft mit mindestens einer Düse 172. Vorliegend umfasst die Masterreinigungseinrichtung 164 zusätzlich noch eine Hubeinrichtung 174, die ausgebildet ist, das Reinigungspad 166 zu verstellen zwischen einer abgesenkten Stellung, in welcher das Reinigungspad 166 mindestens einen der Master 104 kontaktiert, und einer angehobenen Stellung, in welcher das Reinigungspad 166 berührungslos gegenüber allen Mastern 104 gehalten ist.

Anhand von Figur 4 wird nachstehend erläutert, wie eine Mehrzahl von Filmabschnitten 202 am Master 104 des Belichtungstisches 100 fixiert und belichtet wird.

Zunächst wird der zu belichtende Filmabschnitt 202 zu dem in der Halteeinrichtung 102 aufgenommenen, sich im Belichtungsbereich 204 befindenden Master 104 mittels der Filmtransporteinrichtung 106 transportiert, wobei sich die filmabwärts des Masters 104 gelegene zweite Filmhubeinrichtung 140 in einer angehobenen, der Transportkonfiguration entsprechenden Stellung befindet. Zeitgleich oder anschließend wird die erste Filmhubeinrichtung 138 der Filmtransporteinrichtung 106 in eine abgesenkte, einer Belichtungskonfiguration entsprechenden Stellung verstellt, sodass der Hologrammfilm 200 gegenüber dem Master 104 derart gehalten wird, dass die Oberfläche des zu belichtenden Filmabschnitts 202 und die Oberfläche des Masters 104 unter einem spitzen Winkel aufeinander zu oder voneinander weg verlaufend orientiert sind. Nun wird mittels der Anpressrolle 122 der Aufstreifeinrichtung 120 der Filmabschnitt 202 auf den Master 104 ausgehend von dem spitzen Winkel auf den Master 104 aufgestreift, wobei zusätzlich eine Saugluft, also ein Unterdruck an oder um den Master 104 mittels der Drucklufteinrichtung 108 vorliegt.

Dabei wird vorliegend die Anpressrolle 122 aus ihrer linken Stellung gemäß Figur 4 in die in Figur 3 gezeigte rechte Stellung verfahren. Zeitgleich oder anschließend wird auch die zweite Filmhubeinrichtung 140 in die abgesenkte Stellung überführt, sodass dann eine Belichtung des Filmabschnitts 202 erfolgen kann. In vorteilhafter Weise und zur Vermeidung von unerwünschten Effekten beispielsweise durch Newton-Ringe, wird dann die Saugluft reduziert oder der Unterdruck auf ein niedrigeres Maß eingestellt, wobei in einer vorteilhaften Ausgestaltung der Filmabschnitt 202 drucklos am Master 104 gelagert ist. Anschließend wird der Filmabschnitt 202 durch Beleuchten mit dem modulierten Licht 400 belichtet, wodurch das Volumenreflexionshologramm in den Filmabschnitt 202 kopiert wird.

Anschließend wird der Hologrammfilm 200 mittels der Filmtransporteinrichtung 106 weitertransportiert und ein neuer Filmabschnitt gegenüber dem Master 104 positioniert. Dabei wird dann die erste Filmhubeinrichtung 138 in ihre angehobene Stellung überführt, wobei die zweite Filmhubeinrichtung 140 in der abgesenkten Stellung verbleibt. Nun ist der spitze Winkel, der durch die Oberfläche des zu belichtenden Filmabschnitt 202 und die Oberfläche des Masters 104 gebildet ist, filmab des Masters 104 angeordnet, sodass jetzt die Anpressrolle 122 den neuen Filmabschnitt 202 in der Zeichnung von rechts nach links auf den Master 104 aufstreifen kann, wobei dabei in vorteilhafter Weise zusätzlich wieder ein Unterdruck durch die Drucklufteinrichtung 108 an oder um den Master 104 bereitgestellt ist. Somit hat es sich also als sinnvoll und vorteilhaft erwiesen, dass zum Belichten mehrerer Filmabschnitte 202 des Hologrammfilms 200 der spitze Winkel alternierend auf der filmabwärts gelegenen Seite des Masters 104 und auf der filmaufwärts gelegenen Seite des Masters 104 angeordnet wird, und dass die Aufstreifeinrichtung 120 mit ihrer Anpressrolle 122 den zu belichtenden Filmabschnitt 202 dazu korrespondierend, ebenfalls alternierend ausgehend von der filmabwärtsgelegenen Seite des Masters 104 und ausgehend von der filmaufwärts gelegenen Seite des Masters 104 aufstreift. Dies reduziert außerdem die Taktzeit bei einer Herstellung einer Mehrzahl von zu belichtenden Filmabschnitten 202.

Für die Steuerung der einzelnen Konstituenten der Belichtungsmaschine 300 ist außerdem eine Steuerungseinrichtung 326 vorhanden (Fig. 1). Die Steuerungseinrichtung 326 ist dabei in vorteilhafter Weise ausgebildet, die Lichtquelle 304 und/oder die Ablenk- und Scaneinrichtung 310 und/oder den Lichtmodulator 314 und/oder die Filmtransporteinrichtung 106 und/oder die Drucklufteinrichtung 108 und/oder die Aufstreifeinrichtung 120 und/oder die Reinigungseinrichtung 148 und/oder die Einrichtung 158 zur Festlegung der Drehlage der Platte und/oder die Einzelbestandteile der Masterreinigungseinrichtung 164 zu steuern.

### BEZUGSZEICHENLISTE

- 100: Belichtungstisch
- 102: Halteeinrichtung
- 104: Master
- 106: Filmtransporteinrichtung
- 108: Drucklufteinrichtung (Saugeinrichtung und/oder Blaseinrichtung)
- 110: Filmrolle (unbelichteter Holofilm)
- 112: Gasdurchtrittsanordnung
- 114: Venturisaugdüse
- 116: Kanal (Druckluft/Saugluft)
- 118: weitere Filmrolle (belichteter Holofilm)
- 120: Aufstreifeinrichtung
- 122: Anpressrolle
- 124: Schlitten
- 126: Verfahrachse (Schlitten)
- 128: Steuerkurve
- 136: Anschlag
- 138: erste Filmhubeinrichtung
- 140: zweite Filmhubeinrichtung
- 142: Filmhubwalze
- 144: Führungswalze
- 146: Hebelarm
- 148: Reinigungseinrichtung
- 150: erste Sprühdüse
- 152: zweite Sprühdüse
- 154: Masteraufnahme
- 156: Drehlagerung
- 158: Einrichtung zur Festlegung der Drehlage der Platte
- 160: Rastsitz
- 162: Rastglied
- 164: Masterreinigungseinrichtung
- 166: Reinigungspad (z.B. Reinigungsschwamm)
- 168: Dosiereinrichtung
- 170: Einrichtung zur Bereitstellung einer Blasluft
- 172: Düse
- 174: Hubeinrichtung
- 200: Hologrammfilm
- 202: Filmabschnitt (zu belichtender Filmabschnitt)
- 204: Belichtungsbereich
- 300: Hologrammbelichtungsmaschine
- 302: Belichtungseinrichtung
- 304: Lichtquelle (z.B. Laser)
- 306: Strahlführungsoptik
- 308: Spiegel
- 310: Ablenk- und Scaneinrichtung
- 312: Strahlteiler
- 314: Lichtmodulator
- 316: Siliziumschicht
- 318: Flüssigkristallzelle
- 320: Schutzscheibe
- 322: Strahlformungseinrichtung (z.B. Powell- oder Zylinderlinse)
- 324: Polarisationsfilter
- 326: Steuerungseinrichtung
- 400: Licht

## Patentansprüche

1. Belichtungstisch (100) für eine Hologrammbelichtungsmaschine (300),
mit einer Halteeinrichtung (102), in der eine Masteraufnahme (154) ausgebildet oder vorhanden ist, die ausgestaltet ist, einen Master (104) aufzunehmen,
und mit einer Filmführung, die ausgebildet ist, einen Hologrammfilm (200) relativ bezüglich der Halteeinrichtung (102) zu führen und einen zu belichtenden Filmabschnitt (202) in einem Belichtungsbereich (204) relativ bezüglich des Masters (104) für eine Hologrammbelichtung zu positionieren,
**dadurch gekennzeichnet, dass**
die Halteeinrichtung (102) als eine Platte mit einer Mehrzahl an Masteraufnahmen (154) gebildet ist, und dass die Orientierung der Platte bezüglich des Belichtungsbereichs (204) derart veränderbar ist, dass selektiv der für die Hologrammbelichtung erforderliche Master (104) mit seiner Masteraufnahme (154) im Belichtungsbereich (204) angeordnet ist.

2. Belichtungstisch (100) nach Anspruch 1, **dadurch gekennzeichnet, dass** der Platte eine Drehlagerung (156) zugeordnet ist, und dass die Platte um eine senkrecht zur Plattenoberfläche orientierte Achse drehbar gelagert ist.

3. Belichtungstisch (100) nach Anspruch 1 oder 2, **dadurch gekennzeichnet, dass** eine Einrichtung (158) zur Festlegung der Plattendrehlage vorhanden ist, die einem Plattenrand der Platte zugeordnet ist, welcher eine die Masteraufnahmen (154) aufweisende Oberseite der Platte mit einer eine Drehlagerung (156) aufweisenden Unterseite der Platte verbindet.

4. Belichtungstisch (100) nach Anspruch 3, **dadurch gekennzeichnet, dass** die Einrichtung (158) zur Festlegung der Plattendrehlage durch eine zur Anzahl der Masteraufnahmen (154) korrespondierende Anzahl an Rastsitzen (160) sowie durch mindestens ein Rastglied (162) gebildet ist, und dass das Rastglied (162) verstellbar ist zwischen einer aus den Rastsitzen (160) ausgerückten, die Drehung der Platte ermöglichenden Stellung und einer in einen der Rastsitze (160) eingerückten, die Drehung der Platte unterbindenden Stellung.

5. Belichtungstisch (100) nach einem der Ansprüche 1 bis 4, **dadurch gekennzeichnet, dass** der als Platte gebildeten Halteeinrichtung (102) eine Drucklufteinrichtung (108) zugeordnet ist, die ausgebildet ist, den Filmabschnitt (202) mittels eines Unterdrucks an dem in der Halteeinrichtung (102) aufgenommenen und sich im Belichtungsbereich (204) befindlichen Master (104) zumindest zeitweise zu fixieren.

6. Belichtungstisch (100) nach Anspruch 5, **dadurch gekennzeichnet, dass** die Drucklufteinrichtung (108) aus einer Mehrzahl an Gasdurchtrittsanordnungen (112) gebildet ist, dass jeder Masteraufnahme (154) oder dem entsprechenden, darin aufgenommenen Master (104) mindestens eine der Gasdurchtrittsanordnungen (112) zugewiesen ist, und dass die Drucklufteinrichtung (108) mindestens einen Kanal (116) umfasst, der ausschließlich mit der mindestens einen sich im Belichtungsbereich (204) befindlichen Gasdurchtrittsanordnung (112) strömungsmechanisch verbunden ist.

7. Belichtungstisch (100) nach einem der Ansprüche 1 bis 6, **dadurch gekennzeichnet, dass** der Platte abseits des Belichtungsbereichs (204) eine Masterreinigungseinrichtung (164) mit einem Reinigungspad (166) umfasst. welches derart gegenüber den in den Masteraufnahmen (154) aufgenommenen Mastern (104) angeordnet ist, dass beim Verdrehen der Platte oder des Drehtellers das Reinigungspad (166) über den Master (104) streift.

8. Belichtungstisch (100) nach Anspruch 7, **dadurch gekennzeichnet, dass** die Masterreinigungseinrichtung (164) eine strömungsmechanisch mit dem Reinigungspad (166) verbundene Dosierpumpe (168) zur dosierten Bereitstellung eines Reinigungsmittels umfasst.

9. Belichtungstisch (100) nach Anspruch 7 oder 8, **dadurch gekennzeichnet, dass** die Masterreinigungseinrichtung (164) eine Einrichtung (170) zur Bereitstellung einer Blasluft mit mindestens einer Düse (172) umfasst.

10. Belichtungstisch (100) nach einem der Ansprüche 7 bis 9, **dadurch gekennzeichnet, dass** die Masterreinigungseinrichtung (164) eine Hubeinrichtung (174) umfasst, die ausgebildet ist, das Reinigungspad (166) zu verstellen zwischen einer abgesenkten Stellung, in welcher das Reinigungspad (166) mindestens einen der Master (104) kontaktiert, und einer angehobenen Stellung, in welcher das Reinigungspad (166) berührungslos gegenüber allen Mastern (104) gehalten ist.

## Claims

1. An exposure table (100) for a hologram exposure machine (300),
with a holding device (102), in which a master receptacle (154) is formed or present, which is configured to receive a master (104),
and with a film guide adapted to guide a hologram film (200) relative to the holding means (102) and to position a film portion (202) to be exposed in an exposure area (204) relative to the master (104) for hologram exposure,
**characterized in that**
the holding device (102) is formed as a plate with a plurality of master receptacles (154), and that the orientation of the plate with respect to the exposure area (204) is changeable in such a way that selectively the master (104) required for the hologram exposure is arranged with its master receptacle (154) in the exposure area (204).

2. The exposure table (100) according to claim 1, **characterized in that** a rotary bearing (156) is associated with the plate, and that the plate is rotatably mounted about an axis oriented perpendicular to the plate surface.

3. The exposure table (100) according to claim 1 or 2, **characterized in that** a device (158) for fixing the plate rotation position is provided, which is associated with a plate edge of the plate, which connects an upper side of the plate having the master receptacles (154) to a lower side of the plate having a rotation bearing (156).

4. The exposure table (100) according to claim 3, **characterized in that** the device (158) for fixing the plate rotation position is formed by a number of detent seats (160) corresponding to the number of master receptacles (154) and by at least one detent member (162), and **in that** the detent member (162) is adjustable between a position disengaged from the detent seats (160), allowing the rotation of the plate, and a position engaged in one of the detent seats (160), preventing the rotation of the plate.

5. The exposure table (100) according to one of claims 1 to 4, **characterized in that** the holding device (102) formed as a plate is assigned a compressed air device (108) which is designed to fix the film portion (202) by means of a negative pressure to the master (104) received in the holding device (102) and located in the exposure area (204), at least temporarily.

6. The exposure table (100) according to claim 5, **characterized in that** said compressed air device (108) is formed of a plurality of gas passage assemblies (112), that at least one of said gas passage assemblies (112) is assigned to each master receptacle (154) or to the corresponding master (104) received therein, and that said compressed air device (108) comprises at least one channel (116) fluidically connected exclusively to said at least one gas passage assembly (112) located in the exposure area (204).

7. The exposure table (100) according to any one of claims 1 to 6, **characterized in that** the plate comprises, away from the exposure area (204), a master cleaning device (164) with a cleaning pad (166) which is arranged opposite the masters (104) received in the master receptacles (154) in such a way that, when the plate or the turntable is rotated, the cleaning pad (166) brushes over the master (104).

8. The exposure table (100) according to claim 7, **characterized in that** the master cleaning device (164) comprises a metering pump (168) fluidically connected to the cleaning pad (166) for metered provision of a cleaning agent.

9. The exposure table (100) according to claim 7 or 8, **characterized in that** the master cleaning device (164) comprises a device (170) for providing a blowing air with at least one nozzle (172).

10. The exposure table (100) according to any one of claims 7 to 9, **characterized in that** said master cleaning device (164) comprises a lifting means (174) adapted to move said cleaning pad (166) between a lowered position, in which said cleaning pad (166) contacts at least one of said masters (104), and a raised position, in which said cleaning pad (166) is held contactless with respect to all of said masters (104).

## Revendications

1. Table d'exposition (100) pour une machine d'exposition holographique (300), avec un dispositif de retenue (102) dans lequel est formé ou est présent un logement pour original (154) conçu pour accueillir un original (104),
et avec un guide de film conçu pour guider un film holographique (200) par rapport au dispositif de retenue (102) et pour positionner une section de film (202) à exposer par référence à l'original (104) dans une région d'exposition (204) en vue d'une exposition holographique,
**caractérisée en ce que**
le dispositif de retenue (102) est réalisé sous la forme d'un plateau comprenant une pluralité de logements pour original (154), et **en ce que** l'orientation de la plaque par référence à la région d'exposition (204) peut être modifiée de telle manière que le logement pour original (154) de l'original (104) requis pour l'exposition holographique est agencé de manière sélective dans la région d'exposition (204).

2. Table d'exposition (100) selon la revendication 1, **caractérisée en ce que** le plateau est associé à un palier rotatif (156) et **en ce que** le plateau est monté rotatif autour d'un axe orienté perpendiculairement à la surface de plateau.

3. Table d'exposition (100) selon la revendication 1 ou 2, **caractérisée en ce qu'**un appareil (158) permettant de déterminer la position de rotation de plateau est présent et ledit dispositif est associé à un bord de plateau reliant un côté supérieur de plateau présentant les logements pour original (154) à un côté inférieur de plateau présentant un palier rotatif (156).

4. Table d'exposition (100) selon la revendication 3, **caractérisée en ce que** l'appareil (158) permettant de déterminer la position de rotation de plateau est formé par un nombre de sièges de verrouillage (160) correspondant au nombre de logements pour original (154) et par au moins un élément de verrouillage (162), et **en ce que** l'élément de verrouillage (162) peut être déplacé entre une position d'absence de mise en prise par rapport aux sièges de verrouillage (160), qui permet la rotation du plateau, et une position de mise en prise par rapport à l'un des sièges de verrouillage (160), qui empêche la rotation du plateau.

5. Table d'exposition (100) selon l'une quelconque des revendications 1 à 4, **caractérisée en ce que** le dispositif de retenue (102) sous forme de plateau est associé à un dispositif à air comprimé (108) conçu pour immobiliser au moins temporairement la section de film (202) au moyen d'une dépression au niveau de l'original (104) accueilli dans le dispositif de retenue (102) et se trouvant dans la région d'exposition (204).

6. Table d'exposition (100) selon la revendication 5, **caractérisée en ce que** le dispositif à air comprimé (108) est formé d'une pluralité d'agencements de passage de gaz (112), **en ce qu'**au moins un des agencements de passage de gaz (112) est affecté à chaque logement pour original (154) ou à l'original correspondant (104) accueilli dans celui-ci, et **en ce que** le dispositif à air comprimé (108) comprend au moins un canal (116) relié de manière fluidique exclusivement au au moins un agencement de passage de gaz (112) se trouvant dans la région d'exposition (204).

7. Table d'exposition (100) selon l'une quelconque des revendications 1 à 6, **caractérisée en ce que** le plateau comprend, à distance de la région d'exposition (204), un dispositif de nettoyage d'original (164) avec un tampon de nettoyage (166) agencé par rapport aux originaux (104) accueillis dans les logements pour original (154) de telle manière que le tampon de nettoyage (166) balaie l'original (104) lorsque le plateau ou la plaque tournante est en rotation.

8. Table d'exposition (100) selon la revendication 7, **caractérisée en ce que** le dispositif de nettoyage d'original (164) comprend une pompe doseuse (168) reliée de manière fluidique au tampon de nettoyage (166) afin de fournir de manière dosée un produit de nettoyage.

9. Table d'exposition (100) selon la revendication 7 ou 8, **caractérisée en ce que** le dispositif de nettoyage d'original (164) comprend un appareil (170) permettant de fournir de l'air de soufflage et comprenant au moins une buse (172).

10. Table d'exposition (100) selon l'une quelconque des revendications 7 à 9, **caractérisée en ce que** le dispositif de nettoyage d'original (164) comprend un dispositif de levage (174) conçu pour ajuster le tampon de nettoyage (166) entre une position abaissée au sein de laquelle le tampon de nettoyage (166) est en contact avec au moins un des originaux (104), et une position relevée au sein de laquelle le tampon de nettoyage (166) est maintenu de manière à ne pas être en contact avec l'un quelconque des originaux (104).
